# EUROPEAN PATENT APPLICATION

(11) **EP 3 989 138 A1**
(43) Date of publication of application: **27.04.2022**
(21) Application number: 20203269.4
(22) Date of filing: 22.10.2020
(51) Int. Cl.: G06Q 10/06, G06Q 10/00, G06Q 30/00, G06Q 50/06

(54) **METHOD AND SYSTEM FOR DETECTION OF ANOMALIES IN AN INDUSTRIAL SYSTEM**

(71) Applicant: Siemens Energy Global GmbH & Co. KG, 81739 München (DE)
(72) Inventor: The designation of the inventor has not yet been filed

(57) **Abstract**

A detection system, wherein the detection system comprises one or more sensor devices (2) carried by a mobile transport vehicle (1) to a portion of the industrial system for investigation, wherein the sensor devices (2) are adapted to generate sensor data of the investigated portion in at least one sensor domain, and a processing unit (3; 6) adapted to present the generated sensor data of physical objects of interest of the investigated portion of the industrial system by means of a human machine interface as a challenge to a user for identification of dissimilar physical objects and adapted to trigger an inspection of the identified dissimilar physical objects for fault detection in the industrial system.

## Description

The invention relates to a method and system for detection of anomalies in an industrial system and in particular in a power supply distribution system.

For performing maintenance of a complex industrial system, it is required to perform inspection tasks in industrial assets of the industrial system. When performing inspection tasks, a typical approach to identify defect components of the industrial system is to measure and/or estimate their physical properties or attributes and then to make decisions based on the measured quantities. However, the measurement of absolute object properties such as temperature is not always possible and cannot be performed efficiently, especially for remote thermal measurements at long distances. This is particularly challenging when such measurements require highly qualified personnel and/or accurate knowledge of other relevant quantities. For instance, in many use cases, it is required to know the current temperature of a physical object or component. The task of calculating the temperature of an object in an thermal measurement is almost impossible to solve without accurate knowledge of the respective object's relevant physical properties such as emissivity or radiation absorption rate, environmental conditions, in particular the ambient temperature, humidity, wind velocity, presence of other thermal emitters or the transmission properties of the surrounding air. Because in many use cases knowledge about the physical properties of the investigated object as well as knowledge about momentary environmental conditions are not available, the detection of anomalies in an industrial system is inaccurate or not possible.

Accordingly, it is an object of the present invention to provide a method and system for detection of anomalies in an industrial system which are both reliable and accurate even when there is not complete knowledge about the physical properties and environmental conditions of the investigated physical objects within the industrial system.

This object is achieved according to a first aspect of the present invention by a method for detection of anomalies in an industrial system comprising the features of claim 1.

The invention provides a method for detection of anomalies in an industrial system having a plurality of physical objects, wherein the method comprises the steps of:
- generating sensor data of at least one investigated portion of the industrial system by one or more sensor devices in at least one sensor domain;
- detecting automatically multiple instances, O_{i,j}, of the same physical object in the generated sensor data of the investigated portion of said industrial system in sensor modality spaces, S, of one or more sensor domains; and
- presenting the generated sensor data of physical objects of interest in the investigated portion of the industrial system by means of a human machine interface as a challenge to a user for identification of dissimilar physical objects.

In a possible embodiment, the method comprises the steps of: generating sensor data of at least one investigated portion of the industrial system by one or more sensor devices in at least one sensor domain,
consolidating the detected multiple instances of each physical object of interest in the sensor modality space into a unique object representation of the respective physical object, in an intermediate representation space to provide an object inventory of the physical objects of interest in the investigated portion of the industrial system,
cropping the generated sensor data in a target sensor domain for physical objects selected from the provided object inventory and
comparing the cropped sensor data of the selected physical objects to detect anomalies in the investigated portion of the industrial system.

The method according to the present invention can be used for detection of anomalies in any kind of an industrial system comprising a plurality of interconnected physical hardware objects such as connection clamps of a power supply grid.

In a possible embodiment of the method according to the first aspect of the present invention, the sensor data is generated by multiple georeferenced sensor devices to provide multiple sensor data streams in at least one sensor domain.

In a further possible embodiment of the method according to the first aspect of the present invention, the sensor data is generated by georeferenced sensors from cameras to provide camera images of the investigated portion of the industrial system in one or more sensor domains.

In a possible embodiment of the method according to the first aspect of the present invention, the georeferenced sensors are carried by a transport vehicle or by a portable device carried by a person to capture sensor data of the investigated portion of the industrial system.

These transport vehicles comprise flying transport vehicles such as drones or land-based transport vehicles such as trucks.

In a further possible embodiment of the method according to the first aspect of the present invention, instances of the same physical object of the investigated portion of the industrial system are detected in generated sensor data automatically by means of a trained classifier.

In a further possible embodiment of the method according to the first aspect of the present invention, sensor data of at least one investigated portion of the industrial system is generated by an RGB camera, a thermal camera and/or by other sensor devices in different sensor domains.

In a further possible embodiment of the method according to the first aspect of the present invention, the generated sensor data is cropped in a predefined or a selected target sensor domain.

In a further possible embodiment of the method according to the first aspect of the present invention, the selected or predefined target sensor domain comprises the thermal sensor domain.

In a possible embodiment of the method according to the first aspect of the present invention, the transport vehicle comprises a flying transport vehicle, in particular a drone or helicopter, carrying one or more sensor devices which generate multiple sensor data streams in one or more sensor domains.

In a further possible embodiment of the method according to the first aspect of the present invention, the transport vehicle is remote controlled and navigated to the investigated portion of the industrial system.

In a still further possible embodiment of the method according to the first aspect of the present invention, the cropped sensor data of the physical objects of interest selected from the provided object inventory is processed by a trained artificial neural network to detect automatically anomalies in the investigated portion of the industrial system.

In a further possible embodiment of the method according to the first aspect of the present invention, the detected anomalies in the investigated portion of the industrial system are output via a user interface to a user or are output via a data interface to a remote control unit.

In a further possible embodiment of the method according to the first aspect of the present invention, the remote control unit is adapted to trigger automatically countermeasures performed by actuators in response to detected anomalies or is adapted to trigger preventive repair and/or maintenance activities at the site of the industrial system.

In a still further possible embodiment of the method according to the first aspect of the present invention, the physical objects are selected from the provided object inventory for comparison depending on selection or filter conditions including static configuration setup conditions and/or dynamic ambient conditions at the investigated portion of the industrial system.

In a further possible embodiment of the method according to the first aspect of the present invention, the consolidation of the detected multiple instances of each physical object of interest in the different sensor modality spaces into the unique representation of the respective physical object in the intermediate representation space is performed automatically by exploiting predefined spatio-temporal constraints.

In a further possible embodiment of the method according to the first aspect of the present invention, each unique object representation of a physical object in the intermediate representation space comprises a unique object identifier and 3D coordinates of the physical object in a predefined coordinate system.

The invention further provides according to a further aspect a detection system adapted to perform the detection method according to the first aspect of the present invention to detect anomalies in an industrial system, in particular in an industrial power distribution system.

In a possible embodiment of the detection system according to the second aspect of the present invention, the detection system comprises
one or more sensor devices carried by a mobile transport vehicle to a portion of the industrial system for investigation,
wherein the sensor devices are adapted to generate sensor data of the investigated portion in at least one sensor domain, and comprises
a processing unit adapted to present the generated sensor data of physical objects of interest of the investigated portion of the industrial system by means of a human machine interface as a challenge to a user for identification of dissimilar physical objects and is adapted to trigger an inspection of the identified dissimilar physical objects for fault detection in the industrial system.

In a possible embodiment of the detection system according to the second aspect of the present invention, the detection system comprises
one or more sensor devices carried by a mobile transport vehicle to a portion of the industrial system for investigation, wherein the sensor devices are adapted to generate sensor data of the investigated portion in at least one sensor domain and comprises a processing unit adapted to detect automatically multiple instances of the same physical object in the generated sensor data of the investigated portion of the industrial system in sensor modality spaces of one or more sensor domains, and is further adapted to consolidate the detected multiple instances of each physical object of interest in the sensor modality space into a unique object representation object of the respective physical object, in an intermediate representation space to provide an object inventory of the physical objects of interest in the investigated portion of said industrial system, and is further adapted to crop the generated sensor data in a target sensor domain for physical objects selected from the provided object inventory, and is further adapted to compare the cropped sensor data of the selected physical objects to detected anomalies in the investigated portion of the industrial system.

In the following, possible embodiments of the different aspects of the present invention are described in more detail with reference to the enclosed figures.
- Fig. 1: shows a flowchart of a possible exemplary embodiment of a method for detection of anomalies in an industrial system according to the first aspect of the present invention;
- Fig. 2: shows a schematic diagram for illustrating the operation of a method according to the first aspect of the present invention;
- Fig. 3: shows an exemplary use case of the method for detection of anomalies in an industrial power supply system;
- Figs. 4A, 4B: show examples of images taken of a physical object formed by a connection clamp in different sensor domains;
- Fig. 5: shows a block diagram for illustrating a possible exemplary embodiment of a detection system according to the second aspect of the present invention;
- Fig. 6: illustrates a CAPTCHA visualization of images presented to detect dissimilar physical objects.

The method for detection of anomalies in an industrial system having a plurality of physical objects can comprise in a possible embodiment three main steps.

In a first main step, sensor data of at least one investigated portion of the industrial system is generated by one or more sensor devices in at least one sensor domain. The sensor domain may for instance comprise a thermal image sensor domain or a sensor domain of an RGB camera.

In a second main step, multiple instances O_{i,j} of the same physical object can be detected automatically in the generated sensor data of the investigated portion of the industrial system in sensor modality spaces, S, of one or more sensor domains.

In a further main step, the generated sensor data of the physical objects of interest of the investigated portion of the industrial system can be presented by means of a human machine interface as a challenge to a user for identification of dissimilar physical objects. The presented sensor data may originate from a target sensor domain for physical objects selected from a provided object inventory. The selected target sensor domain T can comprise in a possible embodiment the thermal sensor domain including thermal sensor data generated by a thermal sensor device, i.e. a thermal camera.

The challenge can be a CAPTCHA like composite image displayed via a display of a human machine interface (HMI).

In a further optional step, an inspection of the identified dissimilar physical objects for fault detection in the industrial system is performed.

In a possible embodiment, the inspection of the identified dissimilar physical objects can be automatically triggered by a processing or control unit of the detection system.

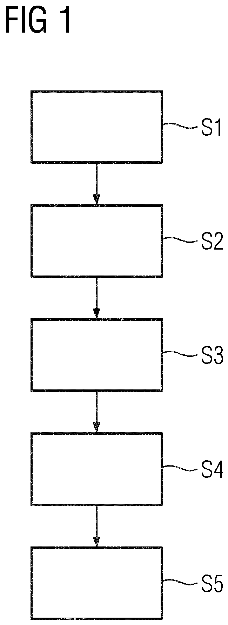

As can be seen in the flowchart of Fig. 1, the method for detection of anomalies in an industrial system having a plurality of physical objects can comprise in the illustrated embodiment five steps S1 to S5. The industrial system may be for instance a power supply grid or a power distribution system having a plurality of physical objects such as wires, connection clamps, etc. To perform maintenance and/or repair activities, it is required to detect anomalies in the investigated industrial system at an early stage to avoid malfunctions of the industrial system.

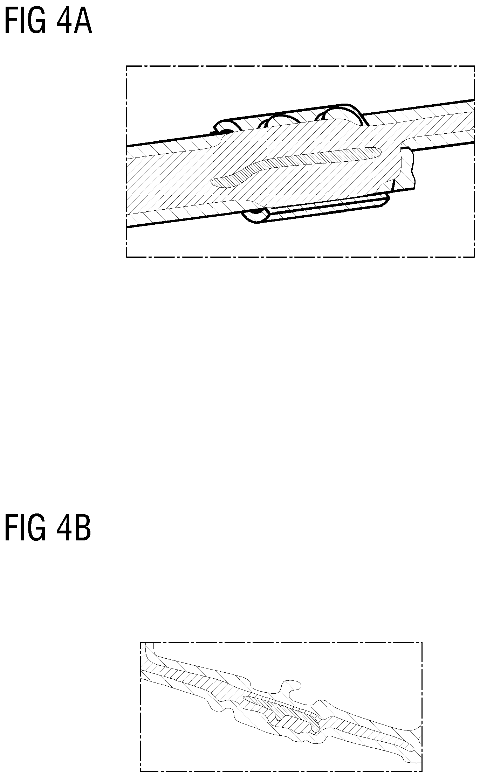

In a first step S1, sensor data of at least one investigated portion of the respective industrial system can be generated by one or more sensor devices in at least one sensor domain. The sensor devices may comprise different kinds of sensors such as an RGB camera, a thermal camera or a LIDAR sensor device. Accordingly, the different sensor devices generate sensor data in different sensor domains. For example, Fig. 4A shows a captured image of a connection clamp in an RGB sensor domain. Fig. 4B shows an image of the same connection clamp captured by a thermal camera.

In a further step S2, multiple instances of the same physical object in the generated sensor data of the investigated portion of the industrial system in sensor modality spaces S of one or more sensor domains are detected. Because of the different sensor devices involved, different instances of the same physical object may be automatically detected. For instance, an image of an instance of the physical object connection clamp may be captured by an RGB camera and another instance of the same physical connection clamp can be captured in another image by a thermal camera forming another sensor device. A further reason that multiple instances of the same physical object are captured is that the sensor devices are transported and do move in the three-dimensional space to capture images from different viewpoints or angles along their trajectory.

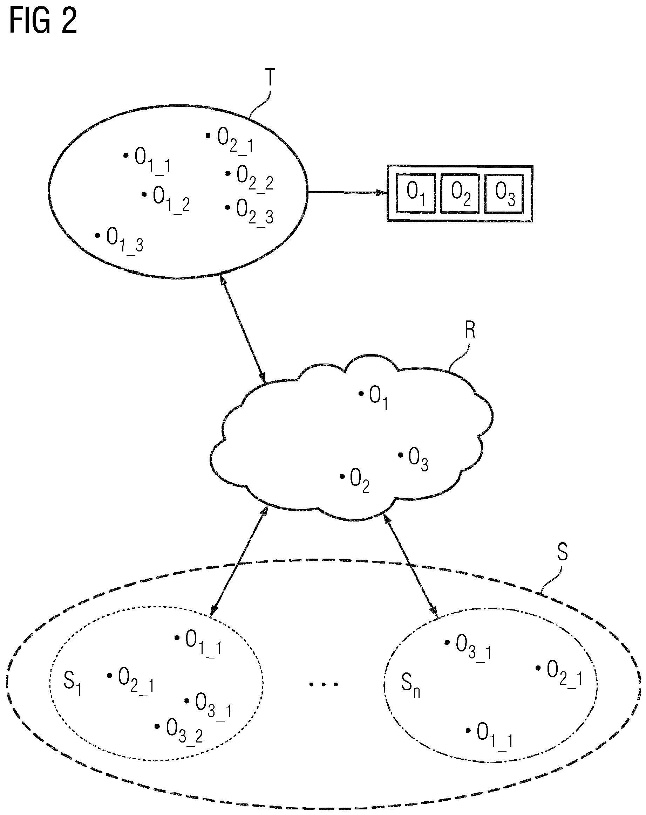

In a further step S3, the detected multiple instances of each physical object of interest in the sensor modality space S are consolidated into a unique object representation object of the respective physical object in an intermediate representation space R to provide an object inventory of the physical object of interest in the investigated portion of the industrial system as also illustrated in an abstract form in Fig. 2.

In a further step S4 of the method according to the present invention as illustrated in the embodiment of Fig. 1, the generated sensor data are cropped in a target sensor domain for physical objects selected from the provided object inventory. During cropping, abundant or unwanted areas of the captured image can be removed. For instance, one of the peripheral areas of the captured image can be automatically removed to isolate the investigated physical object from the surrounding or background.

In a further step S5, the cropped sensor data of the selected physical objects are compared to detect anomalies in the investigated portion of the industrial system. In a possible implementation, the cropped sensor data of the physical objects of interest selected from the provided object inventory can be processed by a trained artificial neural network to detect automatically anomalies in the investigated portion of the industrial system. The comparison of the cropped sensor data in step S5 can be performed in a possible embodiment fully automatically to detect anomalies in the investigated portion of the industrial system.

In alternative embodiments, the comparison in step S5 can possibly be performed semi-automatically involving an investigating user to detect anomalies in the investigated portion of the industrial system. The cropped sensor data of the selected physical objects can in a possible embodiment be presented as a challenge via a human machine interface for identification of dissimilar physical objects. This can trigger automatically an inspection of the identified dissimilar physical objects for fault detection in the industrial system.

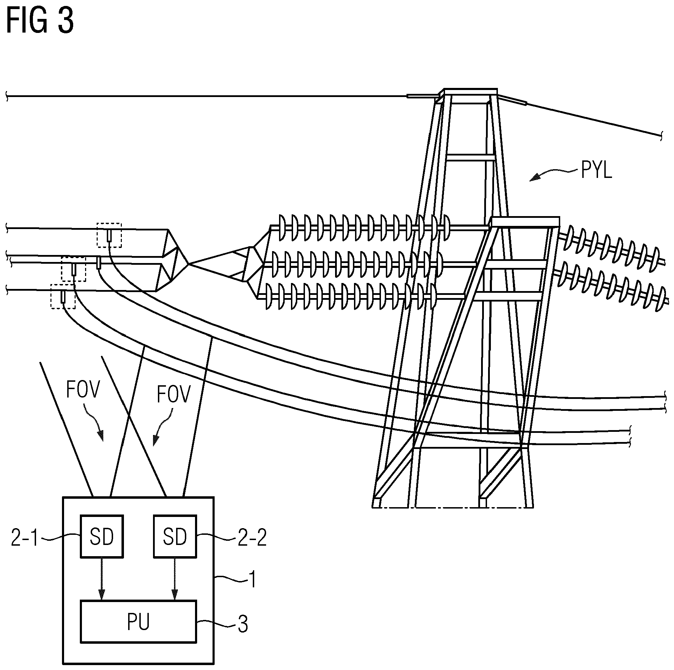

In a preferred embodiment of the method according to the first aspect, the sensor data is generated by multiple georeferenced sensor devices to provide multiple sensor data streams in at least one sensor domain. The sensor devices are georeferenced and provide data in a common coordinate system of the three-dimensional physical room space. In a possible embodiment, a transport vehicle 1 as illustrated in Fig. 3 carrying sensor devices may provide a GPS unit providing the momentary coordinates of sensor devices at any time. In a possible embodiment, the transport vehicle 1 carrying the sensor devices 2 can be remote controlled and navigated to the investigated portion of the industrial system. In a possible embodiment, the remote controlled transport vehicle 1 can move along the investigated industrial system taking into account available layout data or planning data of the investigated industrial system. The transport vehicle 1 may for instance be a helicopter flying along power supply lines of a power supply grid. In an alternative embodiment, the transport vehicle 1 may also comprise a remote controlled drone carrying one or more sensor devices 2 such as cameras.

With the method according to the present invention, the detected anomalies of the investigated portion of the industrial system can in a possible embodiment be output via a human machine interface 7. In an alternative embodiment, the detected anomalies are output via a data interface to a remote control unit 6. This remote control unit 6 can be implemented in a control system of the investigated industrial system. In a possible implementation, the control unit 6 of the investigated industrial system can trigger automatically countermeasures performed by actuators in response to the detected anomalies. Further, the remote control unit 6 of the industrial system may trigger preventive repair or maintenance activities at components or objects where anomalies have been detected.

In a possible embodiment, the physical objects are selected from the object inventory. This selection can be performed in a possible implementation depending on selection or filter conditions. These selection or filter conditions may include static configuration setup conditions and/or dynamic ambient conditions at the investigated portion of the industrial system. For instance, one may want to avoid comparing connection clamps placed on conductors under different electrical load or having different ambient conditions. Different current values passing through the same electrical resistance will generate different thermal signatures such that anomalies or components showing an abnormal behavior cannot be easily detected. For instance, the lack of connected electrical load can have an impact on the temperature of a connection clamp of the power distribution system. Accordingly, only images of connection clamps on conductors where similar electrical loads are connected may provide images or sensor data which can be compared with each other to detect an abnormal connection clamp. Information about the connected devices can be derived from static configuration setup conditions of the investigated industrial system such as data indicating which kind of electrical loads are connected to a component of the industrial system such as an electrical conductor or wire. The circuit diagram of the investigated industrial system can indicate static configuration setup conditions which can be taken into account for selection of physical objects within the object inventory of the industrial system. Also, ambient conditions can influence the sensor data or images of the investigated physical objects. Accordingly, in a possible embodiment, the sensor data of physical objects operating at the same or similar ambient conditions such as ambient temperature is processed to detect anomalies in the investigated portion of the industrial system.

In a possible embodiment of the computer-implemented method according to the present invention, the consolidation of the detected multiple instances of each physical object of interest in the different sensor modality spaces into the unique representation of the respective physical object in the intermediate representation space R in step S3 is performed automatically by exploiting spatio-temporal constraints. For instance, only images or pictures taken by sensor devices 2 being at a certain time in a predefined area can be taken into account when consolidating the instances detected by the respective sensor devices.

In a possible embodiment, each unique object representation of a physical object in the intermediate representation space R comprise a unique object identifier as well as three-dimensional coordinates of the physical object in a predefined common coordinate system.

Fig. 2 illustrates the method according to the present invention on a more abstract level. As can be seen in Fig. 2, there is a group of source modalities S1, S2, ... Sₙ, where multiple object instances O_{i,j} of the same physical object are detected. An object instance O_{i,j} does belong to an object with the object IDᵢ and with the instanceⱼ. To generate object instances with fixed i and variable j, i.e. object instances of the same object ID, one can go through multiple images capturing the same physical object. There may be at least sensor source modality. In step S2 of the method according to the present invention as illustrated in the embodiment of Fig. 1, multiple instances O_{i,j} of the same physical object such as a real single physical connection clamp in a power supply grid are detected in the generated sensor data having one or more sensor modality spaces S. The first sensor modality space S may comprise a thermal sensor modality space which may comprise images taken by a thermal camera. The object instance detections are then consolidated in step S3 into the intermediate representation space R which is geometrically linked to both the source modality spaces S and the target sensor domain T. In the example illustrated in Fig. 2, the intermediate representation space R comprises three unique object representations O₁, O₂, O₃ of corresponding real physical objects. In the example illustrated in Fig. 2, in the first sensor modality space S, there are two object instances O_{3_1}, O_{3_2} of the physical object represented by the unique object representation O₃ in the intermediate representation space R. In contrast, in the first source modality S1, only a single object instance O_{1_1} of a first physical object is represented by the unique object representation O₁ in the intermediate space R. In a possible embodiment, there are a predetermined number N of different sensor modality spaces S each having one or more object instances corresponding to the same physical object. For instance, in the sensor modality space Sₙ shown in Fig. 2, for each physical object, there is only a single object instance available such as a picture taken by a camera. In a possible embodiment, multiple object instances of the same physical object of interest in or more sensor modality spaces S are consolidated into a single unique object representation of the respective physical object in the intermediate representation space R as illustrated in Fig. 2. In this way, it is possible to provide an object inventory of the physical objects of interest in the investigated portion of the industrial system. The object inventory can for instance comprise inventorized items for a given pylon in a power supply grid. From the provided object inventory, it is possible to select physical objects of interest. The generated sensor data in the target sensor domain T can be cropped in step S4 for physical objects selected from the provided object inventory. The generated sensor data can be cropped in a predefined or selected target sensor domain T. In a possible example, the selected or predefined target sensor domain T can comprise the thermal sensor domain. The intermediate representation space R is geometrically linked both with the modality spaces S and with the target domain space T. The physical object of interest does have well-defined representations in all these spaces S, R, T. In the intermediate representation space, the representation of the object of interest is unique, i.e. for a given physical object, there is a unique point in the intermediate representation space R that does describe it. Further, the links between the source modality spaces S and the intermediate representation space R as well as between the target domain space T and the intermediate representation space R allow transitions between the source modality spaces S and the target domain space T only via the intermediate representation space R.

The physical object of interest is first automatically detected in the source modality spaces S. As a result, a list of detection boundaries can be generated, wherein multiple objects instances do correspond to the same physical object, for example, if the object has been captured in multiple views. For example, connection clamps can be detected automatically from high-resolution RGB images via a trained classifier, whereas the inspection task will take place in the thermal domain forming the target sensor domain T. The object instances are then consolidated from the at least one sensor modality space S into the intermediate representation space R. This can be performed for example by exploiting spatio-temporal constraints. Every instance in the intermediate representation space R forms a unique representation of corresponding physical objects forming part of the investigated industrial system.

The elements from the intermediate representation space R are used to automatically crop image regions in the target domain T for the following inspection task. Since the mapping from the intermediate representation space R to the target domain space T involves a one-to-many mapping, search and filtering stages may be required to identify one representation to be taken from the target sensor domain space T for further processing.

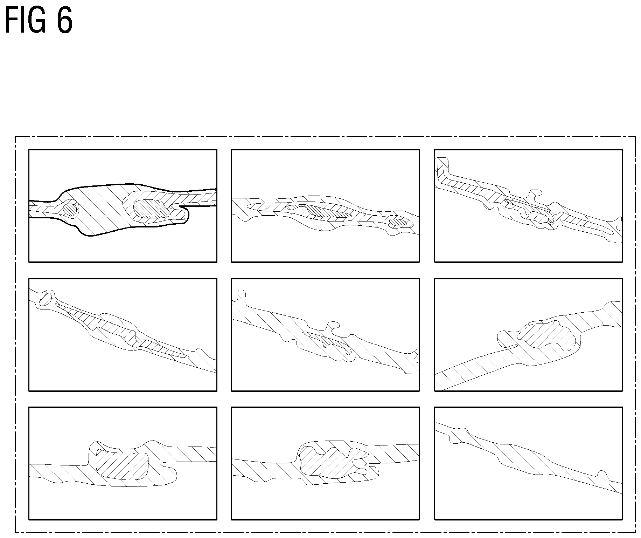

In a possible embodiment, the cropped images or cropped sensor data can be represented as a challenge via a display of a human machine interface (HMI) in a CAPTCHA (acronym for a completely automated public Turing test to tell computers and humans apart) like composite image generated automatically. Fig. 6 illustrates an example of a CAPTCHA visualization which comprises images displayed on a display unit of the human machine interface (HMI) for side-by-side comparison and for selection of images being visually dissimilar from the remaining images. This makes it easier for a human observer or user to identify potential anomalies or dissimilarities due to side-by-side comparison. The cropped sensor data of the selected physical objects are compared with each other to detect anomalies of outstanding sensor data in the investigated portion of the industrial system and/or to identify dissimilar physical objects.

The comparison in step S5 is performed in a possible embodiment using a trained artificial neural network such as a trained artificial convolutional neural network CNN. In this embodiment, the detection of the anomalies can be performed automatically.

In an alternative embodiment, the detection of the anomalies in step S5 can also be performed by a human observer comparing the cropped sensor data or images displayed on a display unit of the human machine interface (HMI) of the detection system. For instance, an inspecting user may find an anomaly of an overheated connection clamp requiring maintenance or replacement.

Since the exact location of the clamp is known from its coordinates in the common coordinate system, a maintenance team can be sent directly to the physical object showing an abnormal physical behavior. A thermal inspection of power lines or cables of a power supply grid or power distribution system is essential for a reliable operation of the electrical energy distribution. In a conventional detection system, the measurement of absolute or relative temperatures of components of a powerline via a thermal image is rather complex requiring knowledge about the emissivity of the surface being inspected. In contrast, the method according to the present invention does not require such information or knowledge. Further, conventional industrial thermal cameras typically come with significant limitations in resolution (i.e. 640x480) as opposed to visual (RGB) camera devices which can reach a resolution of up to 100 Megapixels. In a conventional detection system, this does restrict the thermal camera devices to carefully designed inspection missions, relatively large target objects and/or relatively small distances between the camera and the investigated object. These restrictions are overcome by the method and system according to the present invention. The detection of anomalies in an investigated portion of the industrial system is important because a component or physical object showing anomalies is more likely to fail and may cause a shutdown of the complete industrial facility or system. For instance, in connection clamps as illustrated in Figs. 4A, 4B, thermal defects can appear due to change or (typically increase) in the electrical resistance, generally induced by surface oxidation (caused by external factors such as weather conditions or humidity) or loss in mechanical tension. A human observer to whom the cropped sensor data of selected physical objects are displayed may compare cropped sensor data or images with each other to detect anomalies using his perceptual skills and experience. The observing person can be supported or even replaced in a possible embodiment by a trained artificial neural network to detect automatically anomalies in the investigated portion of the industrial system. Further, if the object under investigation is widespread in the captured image and covers only a small part of the image, a visual comparison might become challenging. Accordingly, the present invention automates and facilitates to a large extent the visual inspection of target industrial assets. In this way, preventive maintenance and repair becomes more efficient and failures or unwanted shutdown times of the investigated industrial system are eliminated.

Fig. 3 shows a possible use case in an industrial system formed by a power distribution system. In the illustrated example of Fig. 3, a pylon PYL of a power distribution system is provided for supporting mechanically isolated power supply cables. The highlighted bounding boxes illustrate instances of a physical object such as a connection clamp. Because there are different kinds of sensor devices which are moving during the inspection process, there are typically several different instances of the same physical objects available. All these different instances can be consolidated into a unique object representation of the respective physical object (i.e. connection clamp) in the intermediate representation space R. In the illustrated example of Fig. 3, a flying transport vehicle 1 such as a drone or helicopter is moving along the power supply cables to inspect components of the system. As can be seen in Fig. 3, the detection system comprises at least one transport vehicle 1 navigated along the investigated industrial system having one or more sensor devices 2-1, 2-2. In the illustrated example, the first sensor device 2-1 may comprise a thermal camera taking thermal camera pictures of the investigated physical objects. The other sensor device 2-2 may comprise an RGB camera providing visual pictures of the same physical object with a higher resolution. The sensor devices 2-i carried by the mobile transport vehicle 1 to a portion of the industrial system for investigation are adapted to generate sensor data of the investigated portion in at least one sensor domain S. The sensor devices 2-1, 2-2 are connected to a processing unit 3 which can be adapted to detect automatically multiple instances O_{i,j} of the same physical object such as a connection clamp in the generated sensor data of the investigated portion of the industrial system in sensor modality spaces S of one or more sensor domains. In a possible embodiment, the processing unit 3 comprises at least one processor adapted to perform the computer-implemented detection method as illustrated in the flowchart of Fig. 1. In an alternative embodiment, the transport vehicle 1 comprises a communication interface which transmits preprocessed data to a remote processing facility for performing at least some of steps S2 to S5 of the method illustrated in the embodiment of Fig. 1. The connection clamps illustrated in the example of Fig. 3 can for instance be a connection clamp as illustrated in Fig. 4A, 4B.

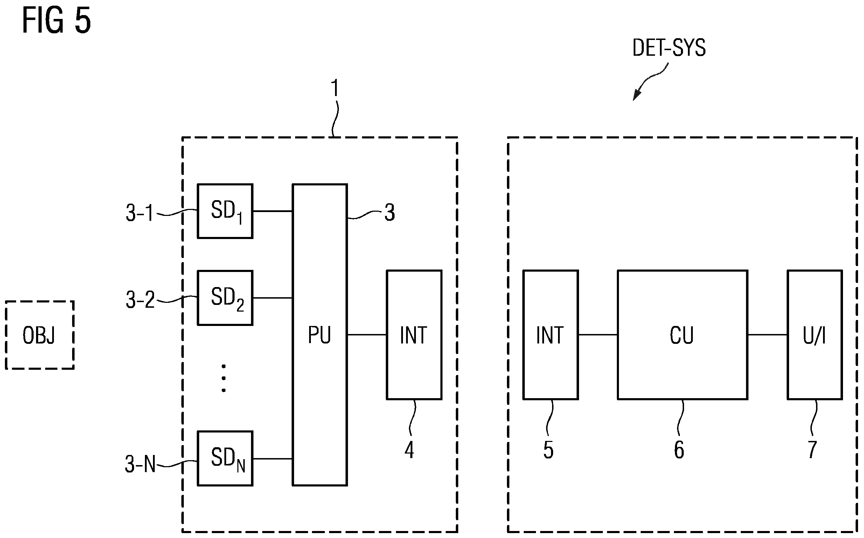

Fig. 5 shows a block diagram of a possible exemplary embodiment of a detection system according to a further aspect of the present invention. In the illustrated embodiment, the detection system comprises a transport vehicle 1 comprising a predefined number of sensor devices 2-1 to 2-n to provide sensor data of a physical object as illustrated in Fig. 5. The transport vehicle 1 comprises in the illustrated exemplary embodiment a communication interface 4 having a wireless link to an interface unit 5 of a remote control system having a control unit 6 and a human machine interface 7. In a possible embodiment, the processing unit 3 of the transport vehicle 1 can perform preprocessing steps processing the different kinds of sensor data provided by the sensor devices 2-1 to 2-n. The sensor raw data may be preprocessed by the processing unit 3. The sensor data can be sampled and stored for further evaluation or presentation. As an alternative, the sensor data may also be communicated directly to the control unit 6 of the detection system. Accordingly, in the embodiment illustrated in Fig. 5, the generating step S1 of the method according to the present invention is performed by the sensor device 2-1 and the further steps S2 to S5 can be performed by one or more processors of the control unit 6. In a possible implantation, the human machine interface 7 comprises a display unit adapted to display the cropped sensor data of selected physical objects to a human observer interacting with the system to mark abnormal components in the investigated portion of the industrial system. The control unit 6 of the detection system can also comprise a trained artificial neural network ANN performing automatically the detection of anomalies in the investigated portion of the industrial system. The control unit 6 can also comprise in a possible embodiment, a trained classifier wherein instances of the same physical object are detected in the generated sensor data automatically in step S2 of the method. The remote control unit 6 of the detection system can also be adapted to trigger automatically countermeasures performed by actuators in response to detected anomalies. These actuators may comprise electronic or electromechanical switches controlled by the control unit 6 to switch off at least some sections or segments of the investigated industrial system in case that anomalies are detected in the behavior of components belonging to the respective section or segment. Further, the control unit 6 of the detection system may also trigger automatically preventive repair and/or maintenance activities. For instance, the control unit 6 may navigate automatically a maintenance team to any component or physical object showing an unnatural or symptomatic abnormal behavior during the operation of the investigated industrial system. The control unit 6 can direct the operators or maintenance team directly to the affected physical object using the coordinates of the object. The unique object representation of a physical object in the intermediate representation space R can comprise in a possible embodiment a unique object identifier such as a serial number as well as 3D space coordinates of the physical object. These three-dimensional space coordinates of the physical object can be used by the control unit 6 to navigate or direct a maintenance team directly to the affected physical object showing the abnormal behavior.

Further embodiments are possible. For instance, the human machine interface 7 can also be integrated in the inspection vehicle 1. The inspection of identified dissimilar physical objects for fault detection in the investigated portion of the industrial system can be performed on the basis of sensor data provided by the sensor devices 3-1 to 3-N of the inspection vehicle 1 as shown in Fig. 5. In a possible embodiment, the inspection vehicle 1 further comprises integrated actuators to perform maintenance and/or repair tasks directly at physical objects found to be faulty.

The method and system according to the present invention is not restricted to the use cases shown in Fig. 1 to Fig. 5. The method and system may for example also be used for other kinds of industrial systems or facilities such as pipeline systems to transport fuel or gas. The inspection vehicle 1 can for example be a submarine investigating underwater pipelines of a gas distribution system or of an oil platform.

Further the sensor devices 2 are not restricted to optical sensor devices or cameras. They can e.g. be also an acoustic sensor device adapted to detect reflected acoustic waves.

## Claims

1. A method for detection of anomalies in an industrial system having a plurality of physical objects,
the method comprising the steps of:
- generating sensor data of at least one investigated portion of the industrial system by one or more sensor devices in at least one sensor domain;
- detecting automatically multiple instances, O_{i,j}, of the same physical object in the generated sensor data of the investigated portion of said industrial system in sensor modality spaces, S, of one or more sensor domains; and
- presenting the generated sensor data of physical objects of interest in the investigated portion of the industrial system by means of a human machine interface as a challenge to a user for identification of dissimilar physical objects.

2. The method according to claim 1, further comprising performing an inspection on the identified dissimilar physical objects for fault detection in the industrial system.

3. The method according to claim 1 or 2 comprising consolidating the detected multiple instances, O_{i,j}, of each physical object of interest in the sensor modality space, S, into a unique object representation of the respective physical object, in an intermediate representation space, R, to provide an object inventory of the physical objects of interest in the investigated portion of said industrial system.

4. The method according to claim 3 comprising cropping the generated sensor data in a target sensor domain, T, for physical objects selected from the provided object inventory.

5. The method according to claim 4
wherein the cropped sensor data are presented as a challenge via a display of the human machine interface in a CAPTCHA image.

6. The method according to claim 5 comprising comparing the cropped sensor data of the selected physical objects to detect anomalies in the investigated portion of the industrial system.

7. The method according to any of the preceding claims 1 to 6,
wherein the sensor data is generated by multiple georeferenced sensor devices to provide multiple sensor data streams in at least one sensor domain.

8. The method according to any of the preceding claims 1 to 7,
wherein the sensor data is generated by georeferenced sensors formed by cameras to provide camera images of the investigated portion of the industrial system in one or more sensor domains, wherein the georeferenced sensors are carried by a transport vehicle to capture sensor data of the investigated portion of the industrial system, wherein the transport vehicle comprises a flying transport vehicle, in particular a drone or helicopter, carrying one or more sensor devices which generate multiple sensor data streams in one or more sensor domains.

9. The method according to claim 8,
wherein the transport vehicle is remote controlled and navigated to the investigated portion of the industrial system.

10. The method according to any of the preceding claims 1 to 9,
wherein instances of the same physical object of the investigated portion of the industrial system are detected in generated sensor data automatically by means of a trained classifier.

11. The method according to any of the preceding claims 1 to 10,
wherein sensor data of at least one investigated portion of the industrial system is generated by an RGB camera, a thermal camera and/or by other sensor devices in different sensor domains.

12. The method according to any of the preceding claims 4 to 11,
wherein the generated sensor data is cropped in a predefined or a selected target sensor domain, T,
wherein the selected or predefined target sensor domain, T, comprises the thermal sensor domain.

13. The method according to any of the preceding claims 4 to 12,
wherein the cropped sensor data of the physical objects of interest selected from the provided object inventory are processed by a trained artificial neural network to detect automatically anomalies in the investigated portion of the industrial system.

14. The method according to any of the preceding claims, wherein the detected anomalies in the investigated portion of the industrial system are output via the human machine interface to the user or via a data interface to a remote control unit.

15. The method according to any of the preceding claims, wherein the control unit triggers automatically countermeasures performed by actuators in response to detected anomalies or triggers preventive repair and/or maintenance activities.

16. The method according to any of the preceding claims 3 to 15,
wherein the physical objects are selected from the provided object inventory for comparison depending on selection or filter conditions including static configuration setup conditions and/or dynamic ambient conditions at the investigated portion of said industrial system.

17. The method according to any of the preceding claims 3 to 16,
wherein the consolidation of the detected multiple instances, O_{i,j}, of each physical object of interest in the different sensor modality spaces, S, into the unique representation of the respective physical object in the intermediate representation space, R, is performed automatically by exploiting spatio-temporal constraints,
wherein each unique object representation of a physical object in the intermediate representation space, R, comprises a unique object identifier and 3D coordinates of the physical object.

18. A detection system (DET-SYS) adapted to perform the detection method according to any of the preceding claims 1 to 17 to detect anomalies in an industrial system, in particular in an industrial power distribution system.

19. The detection system according to claim 18,
wherein the detection system comprises
- one or more sensor devices (2) carried by a mobile transport vehicle (1) to a portion of the industrial system for investigation, wherein the sensor devices (2) are adapted to generate sensor data of the investigated portion in at least one sensor domain, and
- a processing unit (3; 6) adapted to present the generated sensor data of physical objects of interest of the investigated portion of the industrial system by means of a human machine interface (7) as a challenge to a user for identification of dissimilar physical objects and adapted to trigger an inspection of the identified dissimilar physical objects for fault detection in the industrial system.
